# EUROPEAN PATENT APPLICATION

(11) **EP 2 746 017 A1**
(43) Date of publication of application: **25.06.2014**
(21) Application number: 12823637.9
(22) Date of filing: 19.06.2012
(51) Int. Cl.: B29B 9/12, B29C 47/00, C09D 13/00, B43K 19/02, C09C 1/46, C01B 31/04

(54) **FORMULATION FOR PRODUCING A WRITING ARTICLE, PROCESS FOR MANUFACTURING A WRITING ARTICLE AND A WRITING ARTICLE**

(30) Priority: 15.08.2011 BR PI1104155
(71) Applicant: Ebras Comercio de Lápis Ltda., 18200-001 Itapetininga - SP (BR)
(72) Inventor: LEE, Max, CEP-03063-000 São Pailo - SP (BR)
(74) Representative: Magalhães Simões, José Raúl
(86) International application number: PCT/BR2012/000201
(87) International publication number: WO 2013/023261

(57) **Abstract**

"FORMULATION FOR PRODUCING A WRITING ARTICLE, PROCESS FOR MANUFACTURING A WRITING ARTICLE AND A WRITING ARTICLE", wherein the formulation of said writing article can optionally comprise the following components (with a variation of ±2.5%): ABS (Acrylonitrile-Butadiene-Styrene, 37-50%), SAN (Styrene- Acrylonitrile, 14%), Graphite (35-42%), Calcium Stearate (5-10%), Stearin (8%), Talc (5-23%), Mineral Oil (2-3%), Polyethylene (1%), Bentonite (5-15%), Calcium Carbonate (1%). Said article (1) is defined as a single-piece object (2), which has an integral tip (3) that is produced by sharpening; the body of said single-piece object (2) is configured according to a profile standard, and may include multiple sides (4) giving said single-piece object an hexagonal appearance, or even only one encircling side (5), which gives said single-piece object a cylindrical appearance. The manufacturing process consists of the following steps: (a) weighing the raw materials; (b) homogenizing the raw materials using mixing equipment, into which all of the raw materials are fed; (c) feeding the mixture obtained after processing the raw materials in the mixer into a piece of equipment called a pelletizing extruder; (d) feeding the granulated material obtained after processing the mixture in the pelletizing extruder into a second extruder; (e) producing a continuous graphite bar; (f) cutting the graphite bar into bar sections of adequate length according to the size of a pencil; (g) sharpening the graphite sections; and (h) printing, a step that defines obtaining the final product: a writing article (1), which can then be packaged.

## Description

The present invention relates to a new modality of writing article, based on the fact that its structure is composed essentially by graphite joined by means of thermoplastics and laminate inert burdens, crystals and fibrils, from which distinct hardness can be obtained within the general context of quality corresponding to the amounts of writing and erasability, said writing article presents a series of positive aspects compared to conventional writing articles, such as pencils and the like. The present patent application covers not only the writing article itself, but also the formulation to obtain the raw material with which the writing article is manufactured and also the manufacturing process used to obtain the writing article in question.

As generally known, despite computing improvement and popularization, the traditional writing articles are substantially important in modern life for being the most direct, simple and objective way to record information, to allow communication by means of written texts or even as a mean of art production by drawing preparation, etc.

Within such context, pencils are the most popular objects, of universal use and low cost, and its creation dates from the origins of civilization, having its basic principle founded in the pure and simple use of gross coal by the first Hominidae.

Pencil has been improved for ages as regards its manufacturing processes and materials used, but it never failed to present a basic structure made up by a raw wooden body (or more recently made of materials which can be extruded), with a graphite mine positioned in its core (or inks in case of colored pencil).

More recently a variation of conventional pencils was created particularly aimed to the artistic area known as "woodlessgraphite", or in Brazilian terms, as "pure graphite", it being constituted as graphite bar with the same general dimensions of a conventional pencil (body and mine), however without the body.

The "pure graphite" pencil is coated with varnish or ink applied directly on the graphite in order to prevent that such material is transferred to hands during use.

The "pure graphite" pencil is intended to artistic use basically employed for drawing studies requiring coverage (painting) of large areas or requiring creation of accurately defined drafts.

The "pure graphite" pencil is usually sharpened with conventional sharpeners of the same kind of sharpener used for other kinds of pencils, and during sharpening, the "pure graphite" pencils generate a very thin powder, due to total lack of graphite elasticity, powder which must be handled carefully.

The "pure graphite" pencils are extremely fragile articles since, on one hand, they are not protected by a wooden body (or similar material), such as verified in conventional pencils and, on the other hand, the graphite usually used adopts the same formulation used for the mines of the same conventional pencils, which means that they are extremely breakable.

As regards production process, the "pure graphite" pencils are traditionally manufactured since century XIX by basically mixing graphite, clay and water, creating thereby the basic paste. Such basic paste is extruded by a hole at about 10 ton/cm² and make up the soft filaments, which are dried in electric ovens for a period of about 3,5 hours at 120 °C to be hardened.

After the stage above described, the "pure graphite" is processed in very high working temperature oven at about 1000 °C, for 45 minutes to reach the hardness suitable for use. In order to complete the process the "pure graphite" is then dipped into oil so that the product provides better softness during writing.

The different hardness and tonalities change basically due to composition (proportion between graphite and clay), final oven temperature and kind of impregnation oil.

For the reasons stated above, the "pure graphite" pencils cannot be used for other purposes other than the artistic one; they cannot be employed for writing for instance.

Due to the reasons above and even for employment in the artistic area, the "pure graphite" pencils cannot be used by children, fact which restricts further its consumption market to teenagers and adults.

Upon the state of the art above described, the present patent application's applicant sought a solution for the "pure graphite" pencil fragility trying thus to start from the same general concept related to such product in order to create an article which could be used for writing and was not limited to the use in the art field.

The writing article of the application herein should be suitable for use by children and even be part of the school material items in replacement with conventional pencils which adopt the body/mine solution, reason which it could not be breakable and even not generate powder during sharpening.

After long development the application's applicant herein realized that a change in formulation and manufacturing process of the raw material (graphite), used to produce the writing article in question, would be required in order to add higher degree of elasticity to the same and avoid ruptures, and such goal should be reached without prejudice of the capacity of graphite transfer to the paper or another material on which one wished to write.

After several formulations and employing a production process specially developed to obtain a differentiated product, the applicant attained the present writing article, which resulted in a product similar to the "pure graphite" pencil, but, unlike the same, does not require ink or varnish coating to avoid its undesired transfer to the user's hands, provide strength suitable to its handling by children (it is not breakable), does not produce thin powder during sharpening and can be fully employed as school material item once it provides outlining quality and total transfer both to paper and to other substrates which may be used as writing base.

The writing article herein proposed replaces the body/mine-like conventional pencils (with a series of advantages) with a lower manufacturing cost since it does not require equipment, materials and production stages intended to provide the final product with the mine coating body structure, as the case of conventional pencils.

As further compared to the conventional pencils, the writing article herein addressed presents a meaningfully higher yield per pencil unit or, in other words, the writing article object hereof presents a yield which can be six times higher for writing and twenty times higher for painting when compared to the conventional pencils (body/mine) due to a larger effective amount of graphite per pencil unit.

The writing article object hereof, although initially based on the "pure graphite" pencil for artistic use, resulted in a totally new product and with totally never-seen-before technical features due to its particular formulation.

The writing article herein addressed actually creates a new category in the pencil field in general, once it meritoriously links the "pure graphite" pencil preponderant feature, which is the non-requirement of protection body made of wood or another similar material, to the total compatibility with writing use resulting from its higher elasticity and further keeps thus good transfer, features of different hardness and tonalities (from light to dark) as well as erasability.

The object hereof will be described in details with reference to the drawings below listed, in which:
- Figure 1: illustrates a block diagram of manufacturing processing of the writing article here addressed, where each block corresponds to a specific stage of said process; and
- Figures 2 and 3: illustrate two embodiments of the writing article now addressed, and in the first embodiment the writing article provides a multifaceted profile (preferably hexagonal), while in figure 3 the writing article presents a cylindrical profile.

The writing article object hereof and generally indicated by the numeric reference 1 is obtained according to the first formulation of its raw material, which is expressed in the Table 1 below.

**TABLE NUMBER 1**

| Formula number 1 | Variation accepted of 2,5% lower or higher in relation to percentage amounts expressed |
|---|---|
| ABS | 41,00% |
| Graphite | 41,00% |
| Calcium Stearate | 10,00% |
| Talc | 5,00% |
| Mineral Oil | 3,00% |
| Total | 100,00% |

The present formulation presents further six variations, which are expressed in Tables 2 to 7, as presented below.

**TABLE NUMBER 2 - First variation of the raw material formulation:**

| Formula number 2 | Variation accepted of 2,5% lower or higher in relation to percentage amounts expressed |
|---|---|
| ABS | 45,00% |
| Graphite | 40,00% |
| Calcium Stearate | 7,00% |
| Talc | 6,00% |
| Mineral Oil | 2,00% |
| Total | 100,00% |

**TABLE NUMBER 3 - Second variation of raw material formulation:**

| Formula number 3 | Variation accepted of 2,5% lower or higher in relation to percentage amounts expressed |
|---|---|
| ABS | 41,00% |
| Graphite | 38,00% |
| Calcium Stearate | 10,00% |
| Talc | 5,00% |
| Mineral Oil | 3,00% |
| Soot Ink | 3,00% |
| Total | 100,00% |

**TABLE NUMBER 4 - Third variation of the raw material formulation:**

| Formula number 4 | Variation accepted of 2,5% lower or higher in relation to percentage amounts expressed |
|---|---|
| ABS | 37,00% |
| Graphite | 37,00% |
| Calcium Stearate | 8,00% |
| Mineral Oil | 3,00% |
| Soot Ink | 2,00% |
| PE (Polyethylene) | 1,00% |
| Bentonite | 12,00% |
| Total | 100,00% |

**TABLE NUMBER 5 - Fourth variation of the raw material formulation:**

| Formula number 5 | Variation accepted of 2,5% lower or higher in relation to percentage amounts expressed |
|---|---|
| ABS | 50,00% |
| Graphite | 35,00% |
| Calcium Stearate | 10,00% |
| Bentonite | 5,00% |
| Total | 100,00% |

**TABLE NUMBER 6 - Fifth variation of the raw material formulation:**

| Formula number 6 | Variation accepted of 2,5% lower or higher in relation to percentage amounts expressed |
|---|---|
| Graphite | 40,00% |
| Bentonite | 15,00% |
| PP (polypropylene) | 32,00% |
| Stearin | 8,00% |
| Calcium Stearate | 5,00% |
| Total | 100,00% |

**TABLE NUMBER 7 - Sixth variation of the raw material formulation:**

| Formula number 7 | Variation accepted of 2,5% lower or higher in relation to percentage amounts expressed |
|---|---|
| Graphite | 42,00% |
| Calcium Stearate | 10,00% |
| Talc | 23,00% |
| Mineral Oil | 3,00% |
| PE (Polyethylene) | 1,00% |
| Bentonite | 6,00% |
| Calcium Carbonate | 1,00% |
| SAN (Styrene Acrylonitrile) | 14,00% |
| Total | 100,00% |

In the several formulations above the raw materials added to the graphite carry out specific functions, they are: ABS (Acrynolite, Butadiene, Styrene): Thermoplastic base (binder); Calcium Stearate: Product stabilizer and transfer aid; Talc: load, improving the dimensional factor; Mineral Oil: Transfer auxiliary plastifier; Soot Ink: colorant, adds different tonalities to the graphite; PE (Polyethylene): adds bigger porosity to the graphite; Polyethylene Wax: helps the mass primary binding; PP(Polypropylene): adds a binding which originates the rigidity to the graphite; Stearin: helps the ink/graphite transfer; Calcium Carbonate: load and helps to form internal structure of a mass; and SAN (Styrene Acrylonitrile): binder, adds strength to the mine body.

Below are the final product features of the formulas above described:
Formula of table number 1, which constitutes the main raw material formulation, results in a final product with better finishing;
Formula of table number 2, which constitutes the first raw material formulation variation, results in a final product presenting higher strength to impact and good transfer;
Formula of table number 3, which constitutes the second raw material formulation variation, results in a final product presenting better writing tonality (darker);
Formula of table number 4, which constitutes the third raw material formulation variation, results in a final product presenting a softer transfer;
Formula of table number 5, which constitutes the fourth raw material formulation variation, results in a final product with higher hardness for a more accurate writing;
Formula of table number 6, which constitutes the fifth raw material formulation variation, results in a final product with higher softness; and
Formula of table number 7, which constitutes the sixth raw material formulation, results in a final product with good transfer.

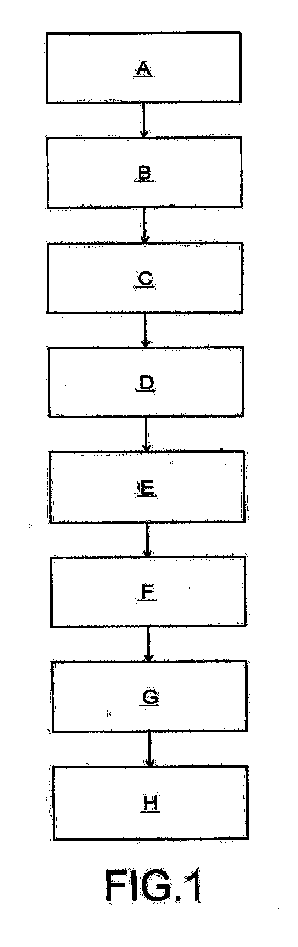

In the field of the writing article herein addressed and as noted in the block diagram of figure 1, it must be stressed out that the same is obtained by means of a large scale process and production comprising the stages of: a) raw material weighing (block A); b) raw material homogenization by employing blending equipment, to which the whole raw material is fed (block B); c) supply of mixture obtained after raw material processing in the blender in equipment called pelletizing extruder (block C); d) supply of granulate material obtained after mixture processing in the pelletizing extruder in a second extruder (block D); e) obtainment of a continuous bar of graphite (block E); f) graphite bar cut-out in bar sectors with suitable length following the size of a pencil (block F); g) graphite sector sharpening (block G); and h) printing (block H), stage which defines the final product obtainment: writing article 1, which is then only intended to packaging.

As verified in the description above, the writing article 1 manufacturing object hereof does not require the procedural stages (and respective equipment as well as corresponding manpower) for external body obtainment, reason which the writing article now addressed, when compared to the body/mine conventional pencils, presents a lower manufacturing cost.

The writing article 1 now addressed is obtained according to a much simpler and cheaper manufacturing process if compared, also in terms of manufacturing process, with the "pure graphite" pencils belonging to the art.

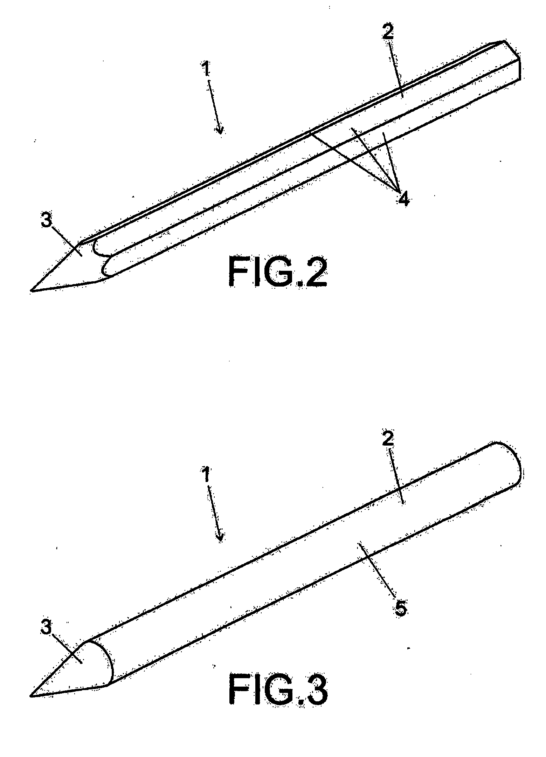

As verified in figures 2 and 3, the writing article 1 is configured as a single-piece part 2 totally produced in the material deriving from the processing of the formulation here addressed (whether the main formulation or one of its variations), and said single-piece part 2 is configured to present the usual average proportions of a pencil or similar, and said article is fitted with an integral tip 3 produced by sharpening. The single-piece part 2 has its body configured according to a profile standard which may include multiple facets 4 which provides it with a hexagonal aspect, for example, or even a single outlining facet 5 which provides a cylindrical aspect.

## Claims

1. "FORMULATION FOR OBTAINMENT OF A WRITING ARTICLE PRODUCTION RAW MATERIAL", wherein the writing article is configured preferably as a product similar to a pencil, it being indicated by the numeric reference (1); said formulation now addressed predicts a main formula number 1, it being composed by: a first material which is the ABS in a ratio of 41,00%, presenting an accepted variation of 2,5% lower or higher in relation to the percentage amounts expressed; a second material which is the Graphite in a ratio of 41,00%, presenting an accepted variation of 2,5% lower or higher in relation to the percentage amounts expressed; a third material which is the Calcium Stearate in a ratio of 10,00%, presenting an accepted variation of 2,5% lower or higher in relation to the percentage amounts expressed; a fourth material which is Talc in a ratio of 5,00%, presenting an accepted variation of 2,5% lower or higher in relation to the percentage amounts expressed; and a fifth material which is Mineral Oil in a ratio of 3,00%, presenting an accepted variation of 2,5% lower or higher in relation to the percentage amounts expressed.

2. "FORMULATION FOR OBTAINMENT OF A WRITING ARTICLE PRODUCTION RAW MATERIAL", according to claim 1, wherein it predicts a formula (2) which is a first variation of the raw material formulation, composed by: a first material which is the ABS in a ratio of 45,00%, presenting an accepted variation of 2,5% lower or higher in relation to the percentage amounts expressed; a second material which is Graphite in a ratio of 40,00%, presenting an accepted variation of 2,5% lower or higher in relation to the percentage amounts expressed; a third material which is the Calcium Stearate in a ratio of 7,00%, presenting an accepted variation of 2,5% lower or higher in relation to the percentage amounts expressed; a fourth material which is the Talc in a ratio of 6,00%, presenting an accepted variation of 2,5% lower or higher in relation to the percentage amounts expressed; and a fifth material which is the Mineral Oil in a ratio of 2,00%, presenting a higher accepted variation in relation to eh percentage amount expressed.

3. "FORMULATION FOR OBTAINMENT OF A WRITING ARTICLE PRODUCTION RAW MATERIAL", according to claim 1, wherein it predicts formula number 3 which is the second variation of the raw material formulation, composed by: a first material which is the ABS in a ratio of 41,00%, presenting an accepted variation of 2,5% lower or higher in relation to the percentage amounts expressed; a second material which is the Graphite in a ratio of 38,00%, presenting an accepted variation of 2,5% lower or higher in relation to the percentage amounts expressed; a third material which is the Calcium Stearate in a ratio of 10,00%, presenting an accepted variation of 2,5% lower or higher in relation to the percentage amounts expressed; a fourth material which is the Talc in a ratio of 5,00%, presenting an accepted variation of 2,5% lower or higher in relation to the percentage amounts expressed; a fifth material which is the Mineral Oil in a ratio of 3,00%, presenting an accepted variation of 2,5% lower or higher in relation to the percentage amounts expressed; a sixth material which is the Soot in a ratio of 3,00%, presenting an accepted variation of 2,5% lower or higher in relation to the percentage amounts expressed.

4. "FORMULATION FOR OBTAINMENT OF A WRITING ARTICLE PRODUCTION RAW MATERIAL", according to claim 1, wherein it predicts a formula number 4 which is a third variation of the raw material formulation, composed by: a first material which is the ABS in a ratio of 37,00%, presenting an accepted variation of 2,5% lower or higher in relation to the percentage amounts expressed; a second material which is the Graphite in a ratio of 37,00%, presenting an accepted variation of 2,5% lower or higher in relation to the percentage amounts expressed; a third material which is the Calcium Stearate in a ratio of 8,00%, presenting an accepted variation of 2,5% lower or higher in relation to the percentage amounts expressed; a fourth material which is the Mineral Oil in a ratio of 3,00%, presenting an accepted variation of 2,5% lower or higher in relation to the percentage amounts expressed; a fifth material which is the Soot Ink in a ratio of 2,00%, presenting a higher accepted variation of 2,5% in relation to the percentage amount expressed; a sixth material which is the PE (Polyethylene) in a ratio of 1,0% and presenting a higher accepted variation of 2,5% in relation to the percentage amount expressed; a seventh material which is the Bentonite in a ratio of 12,00% and presenting an accepted variation of 2,5% lower or higher in relation to the percentage amounts expressed.

5. "FORMULATION FOR OBTAINMENT OF A WRITING ARTICLE PRODUCTION RAW MATERIAL", according to claim 1, wherein it predicts a formula number 5 which is a fourth variation of the raw material formulation, composed by: a first material which is the ABS in a ratio of 50,00%, presenting an accepted variation of 2,5% lower or higher in relation to the percentage amounts expressed; a second material which is the Graphite in a ratio of 35%, presenting an accepted variation of 2,5% lower or higher in relation to the percentage amounts expressed; a third material which is the Calcium Stearate in a ratio of 10,00%, with one accepted variation of 2,5% lower or higher in relation to the percentage amounts expressed; and fourth material which is the Bentonite in a ratio of 5,00%, presenting an accepted variation of 2,5% lower or higher in relation to the percentage amounts expressed.

6. "FORMULATION FOR OBTAINMENT OF A WRITING ARTICLE PRODUCTION RAW MATERIAL", according to claim 1, wherein it predicts a formula number 6 which is the fifth variation of the raw material formulation, composed by: a first material which is the Graphite in a ratio of 40,00%, presenting an accepted variation of 2,5% lower or higher in relation to the percentage amounts expressed; a second material which is the Bentonite in a ratio of 15,00%, presenting an accepted variation of 2,5% lower or higher in relation to the percentage amounts expressed; a third material which is the PP (Polypropylene) in a ratio of 32,00%, presenting an accepted variation of 2,5% lower or higher in relation to the percentage amounts expressed; a fourth material which is the Stearin in a ratio of 8,00%, presenting an accepted variation of 2,5% lower or higher in relation to the percentage amounts expressed; and a fifth material which is the Calcium Stearate in a ratio of 5,00%, presenting an accepted variation of 2,5% lower or higher in relation to the percentage amounts expressed.

7. "FORMULATION FOR OBTAINMENT OF A WRITING ARTICLE PRODUCTION RAW MATERIAL", according to claim 1, wherein it predicts a formula number 7 which is the sixth variation of the raw material formulation, composed by: a first material which is the Graphite in a ratio of 42,00%, presenting an accepted variation of 2,5% lower or higher in relation to the percentage amounts expressed; a second material which is the Calcium Stearate in a ratio of 10,00%, presenting an accepted variation of 2,5% lower or higher in relation to the percentage amounts expressed; a third material which is the Talc in a ratio of 23,00%, presenting an accepted variation of 2,5% lower or higher in relation to the percentage amounts expressed; a fourth material which is the Mineral Oil in a ratio of 3%, presenting an accepted variation of 2,5% lower or higher in relation to the percentage amounts expressed; a fifth material which is the PE (Polyethylene) in a ratio of 1,00%, presenting an accepted variation of 2,5% higher in relation to the percentage amount expressed; a sixth material which is the Bentonite in a ratio of 6,00%, presenting an accepted variation of 2,5% lower or higher in relation to the percentage amounts expressed; a seventh material which is the Calcium Carbonate in a ratio of 1,00%, presenting an accepted variation of 2,5% higher in relation to the percentage amount expressed; and an eighth material which is the SAN (Styrene Acrylonitrile) in a ratio of 14,00%, presenting an accepted variation of 2,5% lower or higher in relation to the percentage amounts expressed.

8. "WRITING ARTICLE MANUFACTURING PROCESS", which is used to produce a writing article (1) configured preferably as a product similar to a pencil and presenting one of the formulations used to obtain the raw material described in claims 1 to 7, wherein the process in question predicts the stages: a) raw material weighing; b) raw material homogenization by employing blending equipment, to which the whole raw material is fed; c) supply of mixture obtained after raw material processing in the blender in an equipment called pelletizing extruder; d) supply of granulate material obtained after mixture processing in the pelletizing extruder in a second extruder; e) obtainment of a continuous bar of Graphite; f) Graphite bar cut-out in bar sectors with suitable length following the size of a pencil; g) sharpening of Graphite sectors; and h) printing, stage which defines the final product obtainment: writing article (1), which is then intended to packaging.

9. "WRITING ARTICLE", which is preferably configured as product similar to a pencil, wherein said writing article is indicated by the numeric reference (1) and obtained based on one of the formulations described in claims 1 to 7 and according to the manufacturing process described in claim 8, wherein the writing article(1) is configured as a single-piece part (2) fully produced in the material deriving from the processing of the formulation herein discussed, and said single-piece part (2) is configured to present usual average proportions of a pencil or similar, and said article is fitted with an integral tip (3) which is produced by sharpening; the body of said single-piece part (2) is configured according to a profile standard which may include multiple facets (4) providing said single-piece part with an hexagonal aspect, or even only one outlining facet (5) which provides it with a cylindrical aspect.
